# EUROPEAN PATENT APPLICATION

(11) **EP 4 817 898 A1**
(43) Date of publication of application: **07.10.2026**
(21) Application number: 26382471.6
(22) Date of filing: 06.04.2026
(51) Int. Cl.: B60F 3/00, E02F 3/76

(54) **AMPHIBIOUS VEHICLE WITH PUSHING AND WAVE DEFLECTOR BUCKET**

(30) Priority: 04.04.2025 ES 202530278
(71) Applicant: Structural Aerospace Systems S.L., 24010 León (ES)
(72) Inventor: De Juan Gutiérrez, Javier, León (ES); Freile Mansilla, Oscar, León (ES)
(74) Representative: Pons IP

(57) **Abstract**

The present invention relates to an amphibious vehicle (1) comprising a body (8) with a front area, a rear area, side areas connecting the front and rear areas, an engine and drive elements, a shovel (2), a support system connecting the body (8) to the shovel (2), a first pivot point between the body (8) and the support system allowing rotation between the support system and the body (8), a second pivot point between the support system and the shovel (2) allowing rotation between the shovel (2) and the support system, wherein the shovel (2) is configured to move from a first position to a second position different from the first position.

## Description

### OBJECT OF THE INVENTION

The present invention relates to an amphibious vehicle comprising a shovel that acts as a pushing shovel, in order to clear obstacles that may be encountered on the way, and as a wave deflector shovel, to prevent waves from breaking over the amphibious vehicle itself and submerging the same. In this way, fitting a different shovel on an amphibious vehicle depending on the function to be performed is not required. With only one system, the purposes of pushing and wave deflector shovel are fulfilled.

### BACKGROUND OF THE INVENTION

Known amphibious vehicles are not limited to military purposes, but also focus on transporting equipment and personnel with ease across exposed terrain, such as flooded areas and other dangerous or inaccessible terrain present in numerous engineering and mining applications.

One of the most common problems encountered by an amphibious vehicle is the inability to avoid obstacles, without being able to remove the same when the amphibious vehicle is moving on the ground. Thus, if the passage is compromised, the amphibious vehicle has no chance to move forward. To solve this problem, amphibious vehicles are known that incorporate a shovel for the removal of these obstacles.

Another common problem encountered by amphibious vehicles is at the aquatic level, and is related to the fact that the amphibious vehicle cannot be fully submerged. To avoid this problem, amphibious vehicles are known to incorporate a wave deflector shovel that prevents waves from submerging the amphibious vehicle.

The use of said two specific systems in the same amphibious vehicle significantly penalises the payload of the amphibious vehicle, these being two systems that could interfere with each other.

The shovel of an amphibious vehicle is required to solve two main problems: to clear obstacles that may be encountered along the way and to prevent waves from breaking over the amphibious vehicle and causing same to sink.

With regard to the installation of the two alternatives on the same amphibious vehicle, the following problems arise:
- High weight, making the inclusion of the two alternatives technically unfeasible for sailing.
- Stability compromised by the extra weight of the shovel and its location, making it technically unfeasible for sailing.
- Duplicity and complexity of accessories, whether hydraulic, pneumatic or electrical.
- High hydrodynamic resistance of the shovel when submerged or needing to be disassembled for sailing.

The following problems are encountered with existing pusher shovels:
- They are sourced from agricultural use or public works.
- They are too heavy for an amphibious vehicle, making their installation unfeasible.
- They are not designed for a marine environment.

As for existing wave deflector mechanisms, they have the problem that they are only intended for the wave deflector function, without any possibility of acting on land.

### DESCRIPTION OF THE INVENTION

The present invention is focused on solving at least one of the problems mentioned in the background. Thus, the invention relates to an amphibious vehicle (amphibious vehicle) comprising a shovel that performs at least one function between that of a pushing shovel, with the aim of being able to clear obstacles that may be encountered on the way overland, and that of a wave deflector shovel, with the aim of preventing waves from breaking over the amphibious vehicle and submerging the same.

For the sake of clarity of the description of the present invention, when referring to the amphibious vehicle, the amphibious vehicle is to be considered to be on land, resting horizontally on the ground by means of the driving elements, whether wheels, tracks or any other known means. Dimensions for the amphibious vehicle in terms of length, width and height are also considered to be those known as a function of the direction of travel, the length being the maximum dimension in the direction of travel, along a first X-axis, the width being the maximum dimension in the lateral direction or perpendicular to the direction of travel and the direction of height, along a second Y-axis, and the height being the maximum dimension in the vertical direction or perpendicular to the ground, along a third Z-axis.

Regarding the dimensions of the shovel, the height of the shovel is considered to be the maximum dimension in the height direction along the third Z-axis at any position of the shovel relative to the support system, and the width of the shovel is considered to be the maximum dimension in the lateral direction along the second Y-axis at any position of the shovel relative to the support system.

With respect to height, the shovel comprises an upper and a lower end. The lower end, in turn, comprises a lower surface that is closest to the ground or horizontal plane.

In terms of width, the shovel comprises two lateral ends.

Said amphibious vehicle comprises an amphibious vehicle body, an engine, drive elements connected to the engine, a shovel and a support system as main elements.

In the amphibious vehicle, when moving through a water environment, there is a waterline and a flood line.

The waterline is the line indicating the position of the upper surface of the water environment relative to the amphibious vehicle itself.

The flood line is an imaginary amphibious vehicle line indicating that the aquatic environment may sink the amphibious vehicle itself beyond the same.

The amphibious vehicle comprises perimetrically a series of areas where it is distinguished:
- a lower area, defined by contact with the ground when advancing along the ground,
- an upper area, opposite to the lower area, defined as the area furthest from the ground when moving along the ground,
- a front area, defined as the most forward area in the forward position of the amphibious vehicle,
- a rear area, defined as the area opposite the front area, and
- a lateral area, defined as the lateral surfaces joining the front area to the rear area.

Preferably, the front area of the amphibious vehicle forms an angle with a range of 30 to 70 degrees to the ground or horizontal plane. Optimally said range is between 40 and 60 degrees with respect to the horizontal plane.

The shovel is attached to the amphibious vehicle body by a support system comprising at least one arm.

The support system is attached to the amphibious vehicle body through a first pivot point that allows rotational movement of said support system relative to the amphibious vehicle body.

Preferably, the amphibious vehicle comprises at least a second actuator, preferably hydraulic or electric, in charge of carrying out the movement of the support system with respect to the amphibious vehicle body.

In turn, the shovel is attached to the support system through a second pivot point that allows rotational movement of the shovel relative to said support system. This second pivot point is preferably located at one end of the shovel. Optimally, in operational position, this first point is at the lower end of the shovel itself.

Preferably, the amphibious vehicle further comprises at least one first actuator, preferably hydraulic or electric, responsible for carrying out the movement of the shovel with respect to the support system.

Preferably, the first pivot point is located in the front or lateral area of the amphibious vehicle, more preferably in the front area.

Preferably, the first pivot point is below the flood line of the amphibious vehicle. More preferably, the first pivot point is at a maximum height of one quarter of the height of the amphibious vehicle body. More preferably, at a maximum height of one fifth of the amphibious vehicle body's height.

In addition, preferably, the amphibious vehicle has a locking mechanism for the support system that locks it in at least one position. In this way, unnecessary operation of the second actuator can be avoided. Preferably, said at least one position can be at any position of the support system with respect to the amphibious vehicle. Optimally, said at least one locking position is the position in which the support system is in a position substantially parallel to the front area of the amphibious vehicle body and in which the second pivot point is further away from the ground than the first pivot point. Said locking mechanism is preferably of a mechanical type. It is particularly advantageous in systems where the second actuator is of the hydraulic type. Said locking position could be used both in the rest position and in the wave deflector shovel position, the only difference being the angle of the shovel with respect to the support system. The locking mechanism can be released either manually or automatically by means of known systems.

Preferably, the support system comprises two arms.

Preferably, the amphibious vehicle comprises two first actuators, one for each arm, responsible for carrying out the movement of the shovel with respect to the support system.

Preferably, the amphibious vehicle comprises two second actuators, one for each arm, responsible for carrying out the movement of the support system with respect to the amphibious vehicle body.

The shovel, the support system and the amphibious vehicle body form an articulated mechanism, which enables the shovel to be positioned to perform both functions, as a pushing shovel and as a wave deflector shovel, depending on whether it is being used for marine navigation or land-based tasks.

Preferably, this articulated mechanism is operated on demand by the driver of the amphibious vehicle itself by means of a control unit that allows the correct positioning of the shovel and the support system for the different functions. Said positioning can be done by means of a preestablished position in at least one of the positions, e.g. rest, wave deflector shovel and pushing shovel.

The rest position consists of having the support system rotated until making contact with the amphibious vehicle body, with the locking system of the locking mechanism engaged, and the shovel retracted against the amphibious vehicle body.

The deflector shovel position consists of having the support system rotated until it is substantially parallel to the front area of the amphibious vehicle (preferably, the highest position of the arm). Preferably, in said position, the locking system of the locking mechanism is activated and the shovel is in turn extended, in an appreciably vertical position, focussed on slowing down the impact of the possible swell.

The pushing shovel position consists of having the shovel in a low position in relation to the amphibious vehicle, at ground level or partially raised, depending on the obstacle to be removed.

Preferably, said control can also be used for positioning the articulated mechanism in positions other than those already mentioned, such as pushing shovel, deflector shovel and rest position.

Preferably, the movement of both the first actuator, or first actuators when it has more than one arm, and the second actuator, or second actuators when it has more than one arm, are independent of each other, the control being able to move the mechanism with the use of only one of the first or second actuator.

With the aforementioned particularities, it is achieved that the system formed by the shovel and the support system are always installed in the amphibious vehicle, without having to assemble or disassemble any element in this respect to carry out at least said two functions.

During use in land-based activities, a pushing shovel is required to clear the ground and move obstacles located on the ground for free transit. To do this, the driver places the shovel at the bottom of the amphibious vehicle, almost at ground level or in a convenient position depending on the obstacle to be overcome.

For marine activities, since the amphibious vehicle is partially submerged, it is necessary to deflect the waves so that the amphibious vehicle can continue to sail, without becoming submerged. To do this, the driver places the shovel in the highest possible position, being totally or partially above the flood line, preventing the waves from submerging the amphibious vehicle, breaking the waves in an attempt to prevent the aquatic environment from exceeding the flood line.

Moreover, the at least one arm is configured to rotate in a first angular range of between -60° and 110° with respect to the horizontal. Preferably between -60° and 90° and optimally between -45° and 70°.

Moreover, the shovel is configured to rotate with respect to the at least one arm in a second angular range of between 30° and 180°. Preferably between 45° and 180° and optimally between 90° and 180°.

In addition, the system is configured so that the shovel can be positioned as follows:
In the wave deflector shovel position, the system is configured so that the shovel comprises a first surface positioned in a third angular range between 45° and 135° with respect to the horizontal, the first surface which will be that which receives the impact of the waves in the forward direction. Preferably between 60° and 120° and optimally between 70° and 110°**.** Preferably, a lower surface (closest to the ground in such a position) of the shovel is substantially flush or below with respect to the flood line. Optimally flush with or at most 20 cm below the flood line.

In the rest position, the system is configured so that the shovel comprises a surface positioned in a range between 90° and 180° with respect to the horizontal. Preferably between 120° and 180° and optimally between 130° and 180°.

In the push position, the system is configured so that the shovel comprises a surface positioned in a range between 45° and 135° with respect to the horizontal. Preferably between 60° and 120° and optimally between 70° and 110°**.**

Preferably, the first shovel surface comprises a fourth angular range which, projected in lateral view, is ideally between 100° and 180°, preferably between 120° and 180°. This configuration achieves better control of the attack on waves and mainland obstacles.

Preferably, the first shovel surface comprises a fifth angular range which, projected in zenith view, is ideally between 120° and 180°, preferably between 140° and 180°. This configuration is intended to improve forward resistance in sailing.

In operation, preferably, the fourth angular range is oriented towards the amphibious vehicle body.

In operation, preferably, the fifth angular range is oriented towards the amphibious vehicle body.

Preferably, the shovel should be built with materials resistant to the marine environment, such as metals (e.g. aluminium or steel) or engineering plastics. Preferably, said materials have a surface treatment such as anodising, several layers of epoxy paint and passivation by means of sacrificial anodes to improve their resistance to water and, in particular, to the marine environment. Optimally, the shovel may be reinforced on its rear face (closest to the amphibious vehicle body) by a number of structural reinforcements, such as gussets, ribs, etc.

Preferably, the shovel has a width of at least 75 % of the total width of the amphibious vehicle.

Also preferably, the shovel has a height greater than 60 cm, more preferably greater than 70 cm.

Preferably, the shovel is less than 3 m high, more preferably, less than 2 m high, and optimally, less than 1.5 m high.

The solution proposed by the present invention, by unifying the two functionalities in a single alternative, provides the following advantages:
- Technical feasibility of having a pushing shovel on an amphibious vehicle.
- Dual functionality of a single amphibious vehicle.
- Unify both alternatives with a contained weight.
- No duplication of accessories, whether hydraulic, pneumatic or electrical, is required.
- Permanent installation, no need to dismantle the shovel for sailing.
- Less impact on hydrodynamic resistance than installing two independent systems (shovel plus wave deflector). Hydrodynamic resistance analogous to that of an independent wave deflector mechanism, without the parasitic resistance of a shovel which has only land-based use and cannot be removed from the submerged part of the amphibious vehicle.
- The complete system is designed for the marine environment, with the appropriate materials and coatings.

Thus, the proposed solution makes it technically feasible to have both functionalities, both as a pushing shovel and as a wave deflector shovel, continuously available on small and medium sized amphibious vehicles without the need to install/uninstall either of said systems as required.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a perspective view of the amphibious vehicle of the invention with the shovel not installed, showing the mounting points.
Figure 2 shows a side view of the amphibious vehicle of the invention with the shovel in the rest position.
Figure 3 shows an enlargement of the amphibious vehicle in the arm and shovel area when in the position shown in Figure 2.
Figure 4 shows a side view of the amphibious vehicle of the invention sailing with the shovel raised to meet a wave, in wave deflector position.
Figure 5 shows an enlargement of the amphibious vehicle in the arm and shovel area when in the position shown in Figure 4.
Figure 6 shows a side view of the amphibious vehicle of the invention with the shovel in pushing position facing a terrestrial obstacle.
Figure 7 shows an enlargement of the amphibious vehicle in the arm and shovel area when in the position shown in Figure 6.

A list is provided below of the different elements represented in the figures with the number references associated therewith:
1. Amphibious vehicle.
2. Shovel.
3. Second actuator.
4. First actuator.
5. Arm.
6. Sea surface.
7. Sea wave.
8. Body.
9. Obstacle.
10. Second actuator anchorage point.
11. Pivot point of the second actuator.
12. Arm anchorage point.
13. Arm pivot point.
14. Locking mechanism.
15. Flood line
   a. First angular range
   b. Second angular range.
   c. Third angular range.
   d. Fourth angular range.
   f. Fifth angular range.

### PREFERRED EMBODIMENT OF THE INVENTION

A preferred embodiment of the amphibious vehicle (1) comprising a shovel (2) that functions both as a pushing shovel and a wave deflector shovel according to the present invention is described below with the aid of the figures.

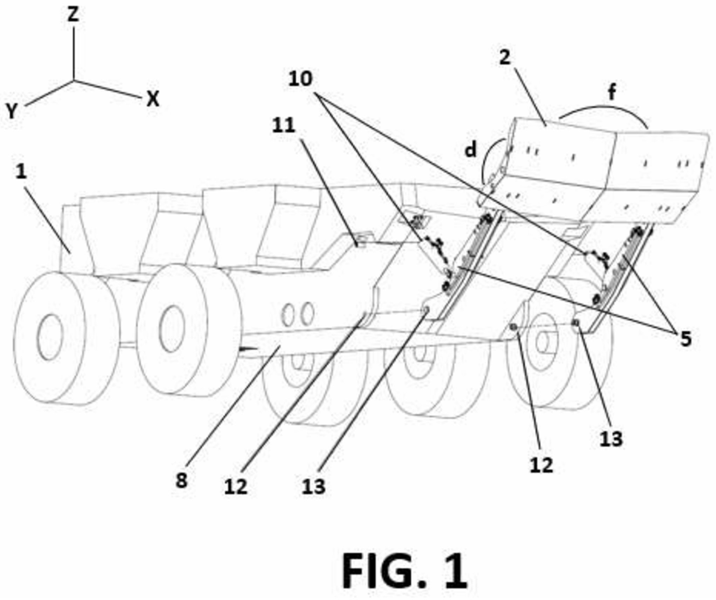

Figure 1 represents the amphibious vehicle (1) of the invention placed on a ground or horizontal plane which in addition to comprising the shovel (2), also comprises a body (8) and a support system linking the body (8) to the shovel (2). Also shown is a coordinate system (X, Y, Z) representing, respectively, the forward direction of the amphibious vehicle along a first X-axis, the transverse or lateral direction along a second Y-axis and the height along a third Z-axis.

The shovel (2) in turn can be defined by a maximum height, in the position with respect to the support system, and by a width.

With respect to height, the shovel (2) comprises an upper and a lower end. The lower end, in turn, comprises a lower surface that is closest to the ground or horizontal plane.

With regard to the width, the shovel (2) comprises two lateral ends.

Figure 1 shows that the support system comprises two arms (5) between the body (8) and the shovel (2). **In** addition, the arms (5) are attached to the upper end of the two lateral ends of the shovel (2) itself.

Because the shovel (2) rotates with respect to the support system, the joint between the two comprises a second pivot point that allows the shovel (2) to rotate with respect to the support system.

In turn, because the support system also rotates with respect to the body (8) itself, the link between the two comprises a first pivot point that allows said rotation. This first pivot point can be seen in Figure 1 by the arm anchorage (12) on the body (8) and its respective arm pivot point (13) on the arm (5) itself. In the example, having two arms (5) means that there are two arm (5) body (8) joints, one for each arm (5).

In addition, the movement of the support system with respect to the body (8) is carried out by a second actuator (3). The figure shows two second actuators (3), one for each arm (5). And more specifically, said second actuators (3) are of the hydraulic type.

The second actuator (3) comprises an anchorage point of the second actuator (10) for attachment thereof to a pivot point of the second actuator (11) of same to the body (8). Said attachment allows the rotation of the second actuator (3) with respect to the body (8).

Figure 1 also shows that the body (8) comprises a front area where the arm anchorage (12) is located. The pivot point of the second actuator (11) is located in said front area, but in a higher position than said arm anchorage (12).

Finally, the amphibious vehicle (1) has driving elements, shown in the Figure as wheels that are driven by a motor (not shown).

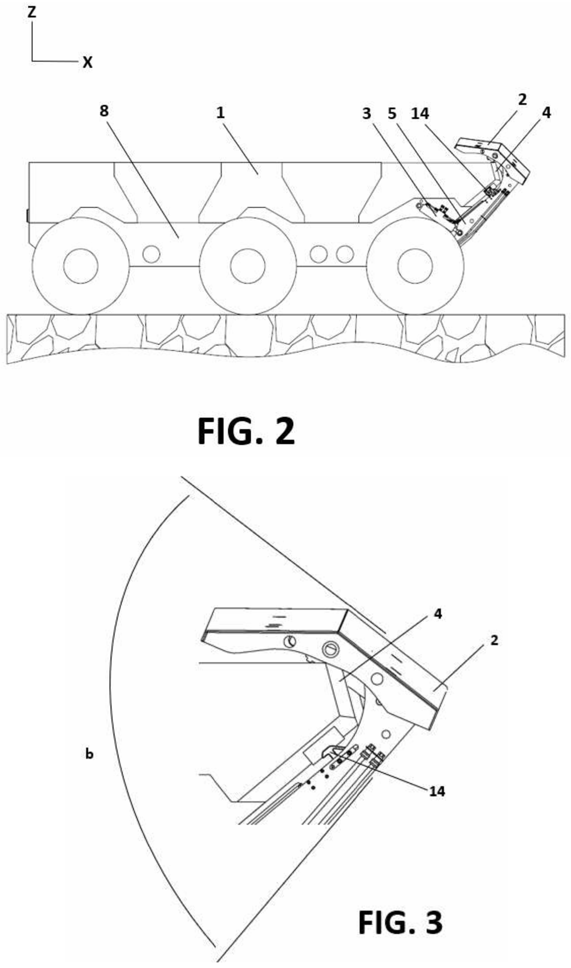

Figure 2 represents the amphibious vehicle (1) of the invention with the shovel (2) folded, in a rest position, in order to avoid interference with the normal use of the amphibious vehicle (1), and Figure 3 represents an enlargement of Figure 2 with regard to the support system and the shovel (2).

Figures 2 and 3 show how the amphibious vehicle (1) is configured so that the arms (5) can be positioned parallel with respect to the front area of the amphibious vehicle, following the surface of said front area of the amphibious vehicle.

The position of the support system is attached to the body (8) by means of a locking mechanism (14). Said locking mechanism enables the support system to be maintained without the need to keep the second actuator (3) in operation.

The locking mechanism (14) consists of a first locking element associated with the support system and a second locking element associated with the body (8). The fixation between the two is done automatically by contact, such as for example of a carabiner fastening system, by hook with trigger and the like, and where the release of both elements is carried out by a specific action in this respect, either manually or through an electric or hydraulic actuator used for said purpose.

In addition, the shovel (2) is oriented with respect to the support system by means of a first actuator (4), in this case also hydraulic. In the example, there are two first actuators (4), although only one of them is visible in the figure.

The control of the second actuator (3) and the control of the first actuator (4) are independent of each other. The amphibious vehicle (1) may comprise a control (not shown) to manage the control of both actuators, including control of the release of both elements of the locking system (14).

In this rest position, the amphibious vehicle (1) is also configured so that the shovel (2) is oriented in the direction of the body (8) and against the advance of the amphibious vehicle (1), achieving that part of the shovel (2) itself can be positioned at least above (further away from the ground) with respect to at least part of the body (8) itself.

The shovel (2), which may be at a second angular range (b) with respect to the support system of between 30° and 180°, in the example is forming an angle of 90° and, in turn, having at least the upper end of the shovel (2) in a range comprised between 90° and 180° with respect to the ground or horizontal plane, in the figure is about 150°.

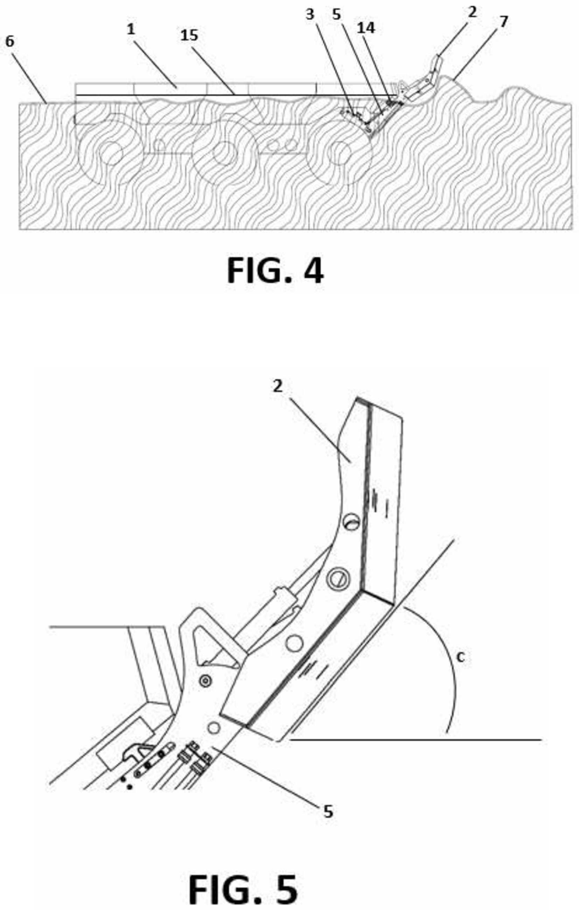

Figure 4 shows the amphibious vehicle (1) of the invention sailing on the sea, although not fully submerged, and Figure 5 is an enlargement of Figure 4 with regard to the support system and the shovel (2).

The amphibious vehicle (1) comprises two very important imaginary lines, a flood line (5) and a waterline.

The flood line (15) is an imaginary line that is constant over time and is the line at which any water in excess of the flood line can cause the amphibious vehicle (1) itself to sink.

The waterline is an imaginary line that changes depending on the load of the amphibious vehicle itself, and is the line that the aquatic environment reaches relative to the amphibious vehicle (1) itself, in this case it coincides with the upper surface of the sea (6).

As can be seen in both Figures 4 and 5, the floating surface must always be below the flooding surface (15) to prevent the amphibious vehicle (1) from sinking.

Furthermore, in Figure 3, it can be seen how waves (7) that are higher than the flood line (15) can appear, but with the appropriate orientation of both the support system and the shovel (2) itself, the wave (7) hits against a first surface of the shovel (2) itself, preventing part of the seawater from entering above the flood line (15).

This position of the support system and the shovel (2) is referred to as the wave deflector shovel position.

In this position, the position of the support system, arms (5), is the same as in the rest position, when the arms (5) are positioned parallel to the front area of the amphibious vehicle (1), following the surface of said front area.

In this wave deflector shovel position, the amphibious vehicle (1) is also configured so that the shovel (2) faces away from the body (8) and towards the forward movement of the amphibious vehicle (1). In this orientation, at least the upper end of the shovel (2) is within a third angular range (c) between 45° and 135° with respect to the ground or horizontal plane, in the Figure it is at 70°.

In addition, in order to perform the function of stopping the waves from sinking the amphibious vehicle (1), the shovel (2) must prevent the water in the aquatic environment from exceeding the flood line. Thus, the shovel (2) is to be arranged so that at least the bottom surface of the lower end in said wave deflector shovel position is flush with the flood line, preferably below the flood line. In the figure it is about 20 cm from the flood line.

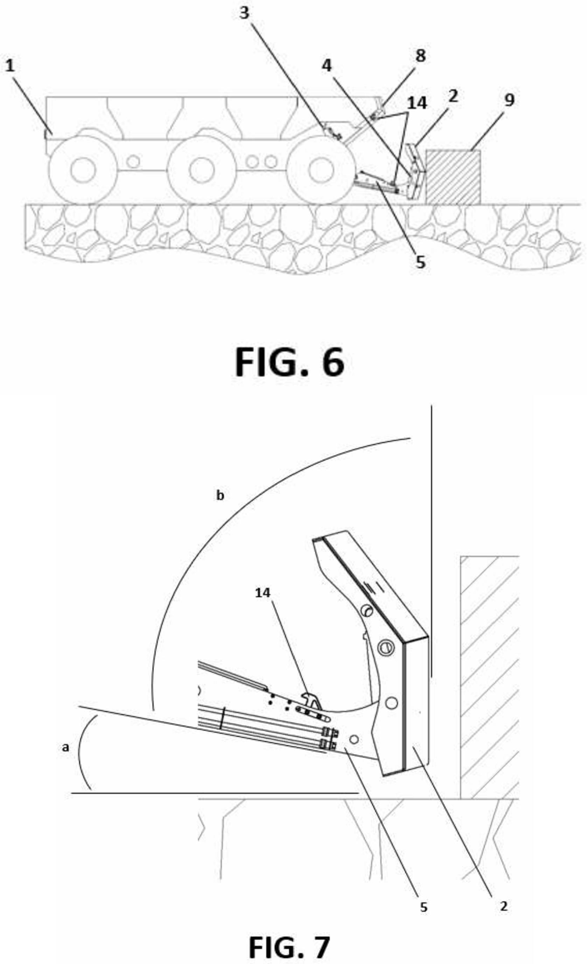

Figure 6 represents the amphibious vehicle (1) of the invention in the pushing shovel position, for use on land and Figure 7 is an enlargement of Figure 6 with regard to the support system and the shovel (2).

In this position, the second pivot point is as close as possible to the ground, wherein the support system, in the figure through its respective arms (5), is oriented in a forward or reverse direction to the body (8) itself.

In this position, the support system, arms (5), can be in a range between 0° and -60° with respect to the ground or horizontal plane. In the Figure it is around -30°.

In this pusher shovel position, the lower end of the shovel (2) has an orientation of between 45° and 135° with respect to the ground or horizontal plane, in the figure it has an orientation of about 70°.

And in turn, the relative angle between the shovel (2) and the support system (arms (5)) can be found in a range between 60° and 120°, in the figure it is about 90°.

The support system can be positioned in different positions depending on the function to be performed, rest, wave deflector shovel or pushing shovel. Due to the range of movement thereof, said support system can rotate in a first angular range of between -60° and 110° with respect to the ground or horizontal plane.

The width of the shovel (2) relative to the amphibious vehicle (1) must be wide enough to fulfil the following 3 functions:
- preventing the flow of water in the forward direction from hitting the shovel (2) and being redirected out of the reach of the rest of the amphibious vehicle in water circulation
- preventing frontal waves that could overtop the flood line
- preventing obstacles (9) in land circulation that could damage any part of the amphibious vehicle (1) itself.

The shovel (2) must therefore be greater than 75 % of the overall width of the amphibious vehicle (1). In the figure, the width of the shovel is greater than 90 % of the overall width of the amphibious vehicle (1).

The height of the shovel (2) is not so much related to the amphibious vehicle (1) itself but to the height of the waves to be received, therefore the range of heights can be very varied. Preferably, the minimum height of the shovel (2) is 60 cm. In the figure, the size of the shovel (2) is about 1.2 m.

The shovel (2) in turn is made of a material resistant to the marine environment, such as metal (e.g. aluminium or steel) or engineering plastics. In the example, the material used is surface-treated aluminium to improve the strength thereof, especially to the aquatic environment in which it will circulate.

The first surface of the shovel (2) is formed by a fourth angular range in lateral view, ideally between 100° and 180°. In the example, said angle is 140°.

The first surface of the shovel (2) is formed by a fifth angular range in zenithal view, ideally between 120° and 180°. In the example, said angle is 150°.

## Claims

1. An amphibious vehicle comprising a body (8) with a front area, a rear area, side areas connecting the front and rear areas, an engine and drive elements, the amphibious vehicle (1) being **characterised in that** it further comprises:
- a shovel (2),
- a support system connecting the body (8) to the shovel (2),
- a first pivot point between the body (8) and the support system allowing rotation between the support system and the body (8),
- a second pivot point between the support system and the shovel (2) allowing rotation between the shovel (2) and the support system,
wherein:
- the shovel (2) is configured to move from a first position to a second position different from the first position.

2. The amphibious vehicle of claim 1, comprising a first actuator (4) responsible for rotation between the shovel (2) and the support system and/or a second actuator (3) responsible for rotation between the support system and the body (8).

3. The amphibious vehicle according to the preceding claims, comprising a locking mechanism (14) for fixing at least one position of the support system wherein said at least one locking position is preferably defined to be the position at which:
- the support system is in a position substantially parallel to the front area of the amphibious vehicle body, and
- the second pivot point is further from the ground than the first pivot point.

4. The amphibious vehicle according to the preceding claims, wherein the support system comprises at least one arm (5), preferably two arms (5).

5. The amphibious vehicle of claim 4, wherein the at least one arm (5) is configured to rotate in a first angular range (a) of between -60° and 110° with respect to the horizontal, preferably between -60° and 90° and optimally between -45° and 70°.

6. The amphibious vehicle of claim 4 or 5, wherein the shovel (2) is configured to rotate with respect to the at least one arm (5) in a second angular range (b) of between 30° and 180°, preferably between 45° and 180° and optimally between 90° and 180°.

7. The amphibious vehicle according to the preceding claims, wherein the shovel (2) comprises a fourth angular range (d) projected in side view comprised between 100° and 180°, preferably between 120° and 180°.

8. The amphibious vehicle according to the preceding claims, wherein the shovel (2) comprises a fifth angular range (f), projected in zenith view comprised between 120° and 180°, preferably between 140° and 180°.

9. The amphibious vehicle according to the preceding claims, wherein the amphibious vehicle is defined by a first width and the shovel is defined by a second width, wherein the second width is at least 75 % of the first width.

10. The amphibious vehicle according to the preceding claims, wherein the shovel (2) comprises a height greater than 60 cm, more preferably greater than 70 cm and less than 3 m, more preferably, less than 2 m, and optimally, less than 1.5 m.

11. The amphibious vehicle according to the preceding claims, wherein the second pivot point is located at the lower end of the shovel (2).

12. The amphibious vehicle according to the preceding claims, wherein the first pivot point is located at the front or side area of the amphibious vehicle.

13. The amphibious vehicle according to the preceding claims, wherein the first pivot point is at a maximum height of one quarter of the height of the amphibious vehicle body, preferably at a maximum height of one fifth.

14. The amphibious vehicle according to the preceding claims, comprising a control for activating both the first actuator (4) and the second actuator (3), preferably independently.

15. The amphibious vehicle according to the preceding claims, wherein the shovel (2) is built of a material resistant to the marine environment, preferably aluminium, and more preferably of a surface-treated material.
